# EUROPEAN PATENT APPLICATION

(11) **EP 1 096 404 A2**
(43) Date of publication of application: **02.05.2001**
(21) Application number: 00123753.6
(22) Date of filing: 31.10.2000
(51) Int. Cl.: G06F 17/60

(54) **A human resource management service system**

(30) Priority: 01.11.1999 JP 31111399
(71) Applicant: Idgate Co., Ltd., Tokyo (JP)
(72) Inventor: Fukui, Masahiro, Shinjuku-ku, Tokyo (JP)
(74) Representative: Goddar, Heinz J., Dr.

(57) **Abstract**

An object is to provide a human resource management service system which makes it possible to perform human resource management necessary for the operations of worker dispatching companies utilizing the system without introducing any special equipment and also to greatly save time for the person seeking employment to register plural worker dispatching companies. By connecting the terminal device of a person seeking employment, the human resource management center, and the terminal devices of worker dispatching companies via network, management center on the network unitarily renders services. The management center provides the person seeking employment with the service to register, via the network, human resource information including the person's experiences, skills, and qualifications by designating the worker dispatching company the information is to be registered with. The management center stores, when the person seeking employment designates the company the information is to be registered with, a part or the whole of the human resource information of the person seeking employment as primary information of the registrant, which can be referred to and retrieved by the designated company, and stores, in a read-write enabled state, secondary information per company in relation to the primary information with respect to the registrant, thereby providing the companies with the service making the primary and secondary information available via the network.

## Description

### Background of the Invention

### Field of the Invention

This invention relates to a human resource management service system utilizing a network for providing a person seeking employment with a service enabling a registration of the human resource information such as his experiences, qualifications, and skills with at least one or more worker dispatching companies he desires and selects at his own initiative, and for providing the worker dispatching companies with a service enabling management of a series of dispatching operations such as selecting a person to be dispatched suitable for their clients' labor demands from among a number of registrants by utilizing the registered human resource information, notifying job announcements to the selected registrants, allocating and recording the dispatching history of the registrant.

### Description of the Prior Art

The utilization of labor from so-called worker dispatching companies as a form of utilizing the human resource (manpower) by enterprises is showing a serious spread. In particular, since the Manpower Dispatching Business Law (hereinafter referred to as the "Dispatching Law") is to be revised soon and the object operations for worker dispatching will as a rule be free from the current restriction of limiting to 26 objects, it is expected that the environments surrounding the persons seeking employment, worker dispatching companies, and the enterprises utilizing those persons and companies will face a revolutionary age.

Steps taken in the dispatching operations are such that a person seeking employment first registers with a desired worker dispatching company and, the company then selects a registrant suitable for the needs of the enterprise user from among a number of persons registered with the company (hereinafter referred to as "registrant") to introduce the selected registrant to the enterprise user, concludes an employment contract with the registrant if an agreement is reached as to working conditions, etc., and has the registrant work as a dispatched worker at the client enterprise.

In order to speedily and efficiently carry out such dispatching operations, the worker dispatching company has generally employed a management method in which by providing a computer system in the company, the human resource information such as registrants' experiences, skills, and qualifications is stored as data base per registrant.

However, a considerable investment in equipment is indispensable for introducing the computer system in the company and it is not practical, except for major companies, for medium-and small-sized worker dispatching companies to bear such considerable burden from the aspect of labor and cost inclusive of system development and system maintenance.

Meanwhile, a person seeking employment generally registers with a plurality of worker dispatching companies concurrently so as to ensure constant employment. In this case, it is necessary for the person seeking employment to investigate the information of a number of worker dispatching companies and pinpoint the specific worker dispatching company or companies he desires to register with upon comparative reviewing, and take registration procedure as required by each company.

### Summary of the Invention

Accordingly, it is an object of this invention to solve the above-mentioned problem and provide a human resource management service system enabling human resource management necessary for a worker dispatching company without any particular equipment being introduced by the company using the system. It is another object of this invention to provide a human resource management service system enabling a person seeking employment to greatly save time for registering with a plurality of worker dispatching companies by allowing the plurality of worker dispatching companies to share under a predetermined restriction the human resource information regarding the persons seeking employment, who is registered in common with the plurality of companies.

According to one aspect of this invention, a human resource management service system comprises a terminal device of a person seeking employment; a human resource management center; and a plurality of terminal devices of worker dispatching companies; the terminal devices being connected to the human resource management center via network, whereby the human resource management center on the network centrally renders services to the terminal device of the person seeking employment and the terminal devices of the worker dispatching companies via the network. The human resource management center provides the person seeking employment with a service to register human resource information including the person's experiences, skills, and qualifications by designating at lease one of the worker dispatching companies the human resource information is to be registered with; stores, when at lease one of the worker dispatching company is so designated by the person seeking employment, a part or the whole of the human resource information of the person seeking employment as primary information for its registrants which can be referred to and searched by the designated worker dispatching company; and provides the plurality of worker dispatching companies with a service to store, in a read-write enabled state, secondary information per the worker dispatching company and enables utilization of the primary and the secondary information, the secondary information being associated with the primary information with respect to the registrants. Thus, the person seeking employment can select at his own initiative one or more worker dispatching companies he desires to registrate and easily register the human resource information on including his experiences, qualifications, and skills with these worker dispatching companies via his terminal device connected to the network. Also, the plurality of worker dispatching companies can easily perform the human resource management of the registrants registered with them by accessing the human resource management center via the company's terminal device connected to the network without installing any particular in-house equipment for human resource management.

Hereupon, the secondary information per worker dispatching company may desirably include history information related to the registrant and arising in relation to the dispatching operations, thereby the worker dispatching company is able to refer to, retrieve, and update the dispatching records of its registrants.

According to another aspect of this invention, a human resource management service system comprises a terminal device of a person seeking employment; a human resource management center; and a plurality of terminal devices of worker dispatching companies; wherein the terminal devices are connected to the human resource management center via network whereby the human resource management center on the network centrally renders services to the terminal device of the person seeking employment and the terminal devices of the worker dispatching companies via the network. The terminal device of person seeking employment has means for inputting human resource information including the person's experiences, qualifications, and skills by designating at least one or more of worker dispatching companies the person seeking employment desires to register the information with. The human resource management center comprises human resource information storage means for storing the input human resource information; registrant information storage means having areas allotted for each of the plurality of worker dispatching companies, a part or the whole of the input human resource information corresponding to the person seeking employment from the human resource information storage means being stored as registrant information of registrant into the areas allotted for the particular worker dispatching company or each of plural worker dispatching companies upon designation by the person seeking employment; history information storage means with areas allotted for each of the plurality of worker dispatching companies, the history information related to the registrant, the history information arising in relation to dispatching operations for the registrant; and information management means for managing the information stored in the human resource information storage means, registrant information storage means and history storage means. The terminal devices of worker dispatching companies comprising input/output means for referring to, retrieve and update the aforementioned registrant information stored in the registrant information storage means and the history information stored in the history information storage means via the information management means.

With the constitution as stated above, when the person seeking employment inputs the human resource information including his experiences, qualifications, and skills via the terminal device, the information is first stored in the human resource information storage means and then partially or wholly stored in the area within the registrant information storage means, which area is allotted exclusively for the worker dispatching company designated for the registration by the registrant. Therefore, since the data base of the company's registrant information is automatically structured merely upon the person seeking employment's selection of the worker dispatching company at his own initiative, the worker dispatching company can select a person suitable for dispatching from among the company's registrants promptly and occasionally by referring to and retrieving the information via the company's terminal device. Furthermore, since the worker dispatching company is always able to structure the updated data base relating to the company's registrants by updating the information as regards the present status (dispatching situation) and dispatching history of the company's registrants in the registrant information storage means and history information storage means through inputting, correcting or otherwise, the worker dispatching company can enjoy the benefit equivalent to the introduction of an exclusive management system for the company.

Now, the input means provided for the terminal device of the person seeking employment and the input/output means provided for the terminal devices of the aforementioned plurality of worker dispatching companies include but not limited to electronic terminal devices such as a personal computer with a Web browser installed, a mobile phone capable of referring to the Web page or a personal digital assistant. Also, the human resource management center may desirably be provided with the Web server on the internet and the data base server for managing the information stored in each of the aforementioned human resource information storage means, registrant information storage means, and history information storage means. Herewith, by connecting to internet and by using the electronic terminal device enabling reference to the Web page, the human resource management service can easily be available.

Also, it is desirable in the human resource management service system according to the another aspect of the invention, that the human resource management center is provided with a message server having storage means for storing, in advance, messages which the worker dispatching companies desire to send; and transmitting/receiving means for selectively transmitting a predetermined message to a predetermined registrant of the worker dispatching company in accordance with the procedure designated in advance, and receiving a reply to the predetermined message from the registrant; and the information management means stores the reply received from the registrant into the registrant information storage means and/or history information storage means.

Thereby, for example, having the message server sent a predetermined messages to the registrant's telephone, FAX and mobile phone and receive the reply enables making an appointment with the registrant, confirmation of the registrant's working status, storing the registrant's reply as the company's registrant information and/or history information, and management thereof in real time.

### Brief Description of the Drawings

The invention will be explained in more detail in conjunction with appended drawings, wherein:
Fig. 1 is an explanatory drawing showing the constitution of the human resource management service system of the preferred embodiment according to this invention;
Fig. 2 is an explanatory drawing showing an example of part of the information stored in the human resource information DB;
Fig. 3 is an explanatory drawing showing an example of part of the information stored in the registrant DB;
Fig. 4 is an explanatory drawing showing an example of part of the information stored in the history DB;
Fig. 5 is an explanatory drawing explaining the basic functions of the human resource management service system of the embodiment according to this invention;
Fig. 6 is a flowchart showing an example of appointment processing in which the functions of the human resource management service system of the embodiment according to this invention are utilized; and
Fig. 7 is a flowchart showing an example of the working status confirmation processing in which the functions of the human resource management service system of the embodiment according to this invention are utilized.

### Detailed Description of the Preferred Embodiments

A preferred embodiment of the invention is explained with reference to the drawings as follows:

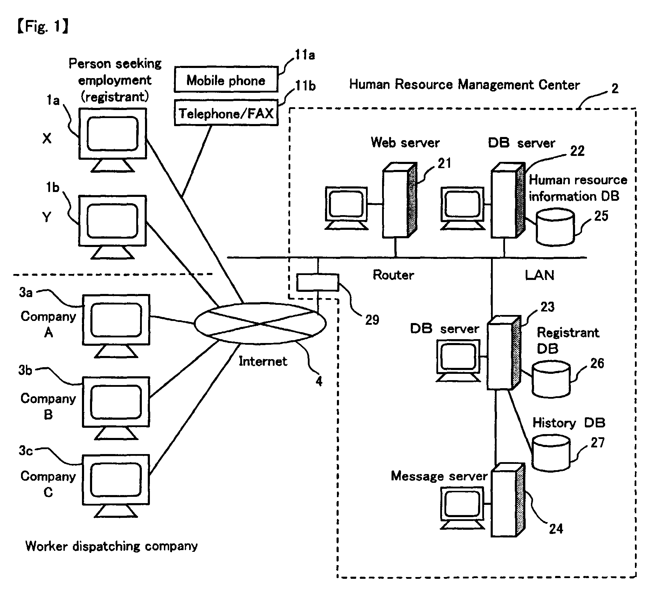

Fig. 1 shows the human resource management system according to a first preferred embodiment of this invention. The system is, as the basic configuration, provided with terminal devices (personal computers) 1a and 1b each with a Web browser installed and owned by persons seeking employment X and Y respectively, human resource management center 2, and terminal devices (personal computers) 3a, 3b, and 3c also with a Web browser installed and each owned by worker dispatching companies A, B, and C respectively. These terminal devices 1a, 1b, 3a, 3b, and 3c, and human resource management center 2 are connected via internet 4. Human resource management center 2 is provided with a Web server 21, a first data base server 22, a second data base server 23, and a message server 24, these being connected to LAN 28 to constitute a network and at the same time connected to internet 4 via router 29. It is noted that 11a is a telephone/FAX owned by the person seeking employment X and 11b is a mobile phone also owned by the person seeking employment X.

The Web server 21 is a server to provide data base service to the user accessing via internet 4. In the preferred embodiment of this invention, the Web server 21 is provided with an ordinary CGI (Common Gateway Interface, not shown), wherein instructions are given to the first and second data base servers 22 and 23 in accordance with the requests from the users, i.e., unspecified number of persons seeking employment (registrants), and worker dispatching companies utilizing the system, and at the same time, HTML documents are generated based on the replies from both data bases and transmitted to the user. The first data base server 22 has human resource information DB 25 while the second data base server 23 has registrant DB 26 and history DB 27 per worker dispatching company, these having DBMS (Database Management System) just as an ordinary data base server.

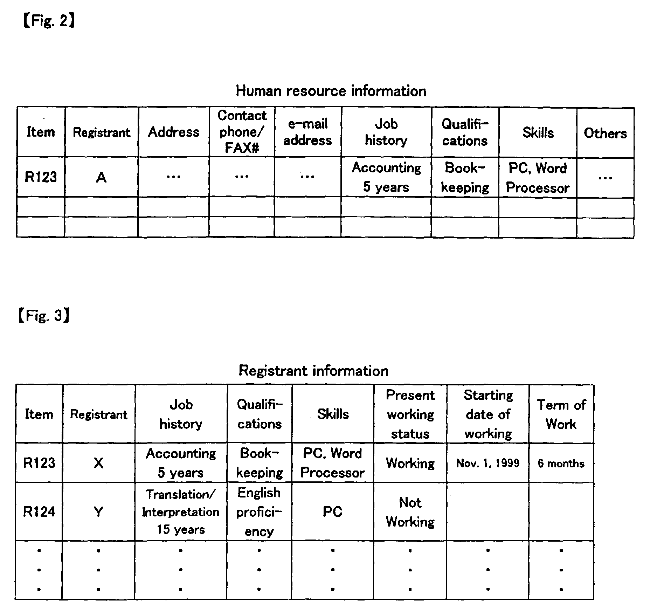

Figs. 2, 3, and 4 show part of the information stored in the aforementioned human resource information DB 25, registrant DB 26 and history DB 27 for example. Herein, Figs. 2, 3, and 4 are, for convenience for explanations, expressed in the form of table; and these tables are not intended for describing any specific data configuration of each DB or relationship, etc. of each data.

Human resource information DB 25 is a storage means for storing human resource information including job experiences, skills, and qualifications the persons seeking employment input by operating the terminal devices 1a and 1b respectively. As shown in Fig. 2, with respect to registrant A for example, the address, contact phone/FAX number, e-mail address, job history (5 years, accounting clerical work), qualification (bookkeeping), skills (PC, word processor), and other human resource information input by the person seeking employment are stored as is. R123 shown in Fig. 2 is the ID given to registrant X and the information of registrant X is managed with the ID as the flag.

The registrant DB 26 is the storage means for storing the partial or whole human resource information of the person seeking employment into the storage area allotted for each designated worker dispatching company as the registrant information of the company in accordance with the designation of the worker dispatching company by the person seeking employment. Fig. 3 shows part of the example of the registrant information stored in the area allotted to worker dispatching company A in the case persons seeking employment X and Y designate the registration with the company A at the time of aforementioned inputting, and therein included are the present status (the current working status of the registrant: either working or not working is input for example) input by worker dispatching company A in its own, the work starting date and working period if the registrant is working, in addition to the basic information on the registrants such as the job history, qualification, and skills. The registrant information on the is managed by ID (X: R123, and Y: R124, ···) given for each registrant.

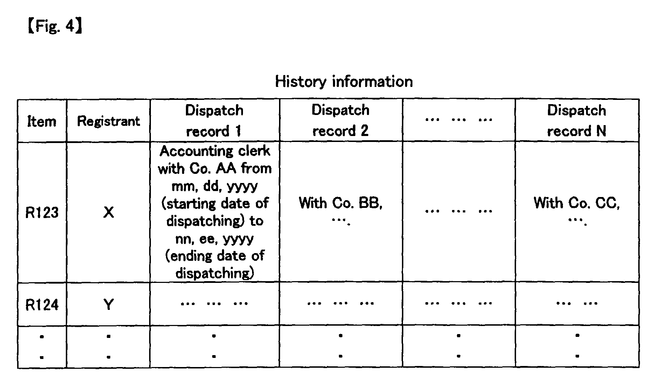

The history DB 27 is the storage means for storing history information arising in relation to dispatching operations for the registrant registered with the worker dispatching company into the storage area allotted to each worker dispatching company, wherein the history information is associated with the registrant. Fig. 4 shows part of the example of the history information of worker dispatching company A. Herein, the past dispatching record of the registrant is stored in a time series as dispatching record 1, dispatching record 2, ···dispatching record N and managed by ID (X: R123, Y: R124,···) given to each registrant.

Message server 24 has storage means 31 to prestore the message desired by the worker dispatching company and a transmitting/receiving means 32 to give the predetermined registrant of the company the notice of the preset messages in a selective form in accordance with the procedure designated in advance, and at the same time to receive from the registrant a reply to the notice. The details of the functions thereof will be explained later.

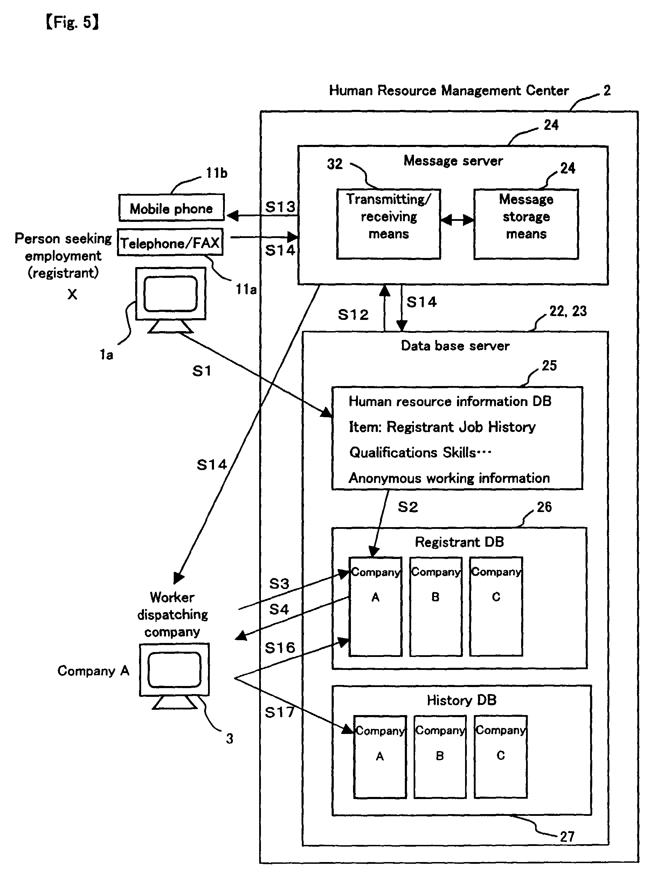

The basic functions of the human resource management service system consisting of the above configuration of the preferred embodiment according to this invention are explained with reference to Fig. 5. Now, Fig. 5 shows the example in the case the person seeking employment X designates the registration with the worker dispatching company A, in which elements similar to those described with reference to Fig. 1 are denoted by the same reference numerals.

First, the person seeking employment X accesses human resource management center 2 by operating his terminal device (personal computer with a Web browser installed) 1a to connect to the internet. The home page of human resource management center 2 is then displayed on the screen with the menus such as "new registration page", "registrant page", "worker dispatching company page", etc. appearing. By clicking the menu of "new registration page", the screen specially designed for new registration is displayed with the appearance of columns for entering name, date of birth, address, contact phone/FAX number, e-mail address, job history (5 years, accounting clerical work), qualification (bookkeeping), skills (PC, word processor), and other information to be input by the person seeking employment, and also the check box of plural worker dispatching companies receiving the service provided by the system. The person seeking employment X inputs human resource information in the columns for entering the information, enters a check mark in the check box of the worker dispatching company he desires to register with, that is, worker dispatching company A in this case, clicks the "registration" button for transmission to human resource management center 2 (the above is referred to Step S1).

When receiving the request for the registration of human resource information from the person seeking employment X, the human resource management center 2 accesses the human resource information DB 25 of data base server 22 via Web server 21, and thereupon the human resource information of person seeking employment X is written and stored. Also, which worker dispatching company the person seeking employment X has designated to register with is checked, thereby a part or the whole of the human resource information of person seeking employment X stored in the human resource information DB 25 is written and stored as is into the area allotted to the company A designated by registrant X among registrant DB of data base server 23 (the above is referred to Step S2).

The worker dispatching company A accesses the human resource management center 2 by operating the terminal device of the company (personal computer with a Web browser installed) 3a to connect to the internet. By clicking the "worker dispatching company page" menu on the home page of human resource management center, the dialogue box for authorization input is displayed, and by inputting ID and password exclusively used for worker dispatching company A, the specific screen including menus of reference to, retrieving, and updating the company's registrant information and history information is displayed. Hereupon, as stated above, although the registrant information and history information are stored respectively in the area allotted to each of the worker dispatching companies among the registrant DB 26 and the history DB 27, access by worker dispatching company is security-controlled by server 23 in the manner so that the access is limited to only the information stored in the area allotted to the company. Therefore, the access of worker dispatching company A is limited to its own registrant information and history information.

Now, in the case the worker dispatching company A retrieves from the registrant DB to select suitable registrants in response to a request from a client enterprise asking for worker dispatching, an example of selecting a person having an "accounting" experience stated in the job history is given. The worker dispatching company A inputs "accounting" as a retrieve condition on the retrieve menu screen for transmission to the human resource management center 2. Then, in the human resource management center 2, the Web server 21 receives the request and transmits the SQL statement to the DBMS of data base server 23. The DBMS of data base server 23 accesses the registrant DB 26 in accordance with the SQL statement to retrieve "accounting" as a keyword. As shown in Fig. 3, since the registrant X has a job history of "accounting", the retrieve results includes the registrant X as a suitable person (Step S3). It should be noted that although the example herein refers to a method in which the DBMS of data base server 23 performs retrieval in accordance with the SQL statement, it is needless to say that, other than the method stated above, the method of retrieving the whole statement of the text data is also applicable.

The data base server 23 transmits the retrieve results to the Web server 21. Then, the Web server 21 prepares HTML by using the CGI function to transmit it to the terminal device 3a of worker dispatching company A. When the terminal device 3a of worker dispatching company A receives the HTML, the retrieve results are displayed on the screen. In this way, the worker dispatching company A selects suitable persons from among the registrants of the company and comes to know that the registrant X is included in the selected persons (Step S4).

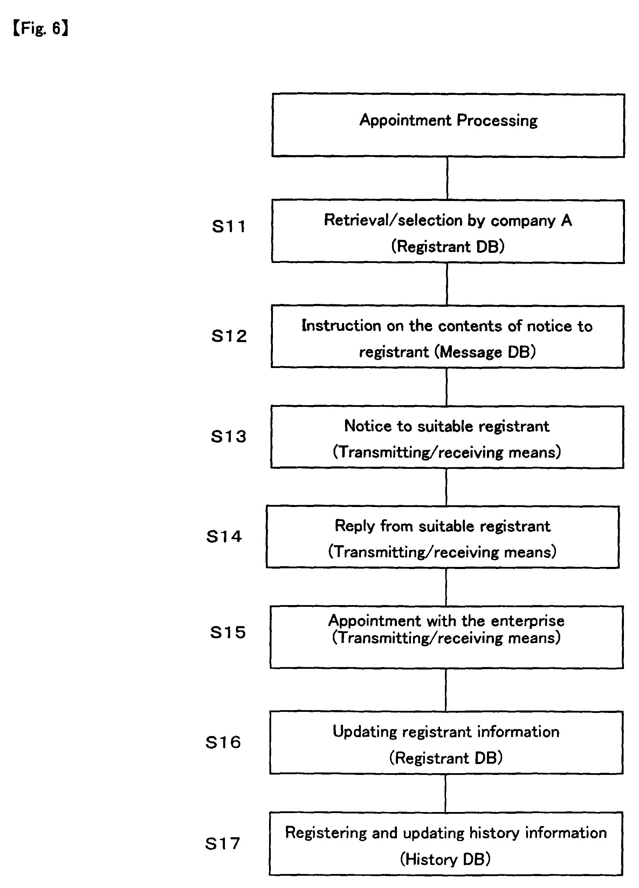

Next, based on the retrieve results so obtained and by utilizing the human resource management service system of the preferred embodiment according to this invention, the processing in which the worker dispatching company A makes an appointment with the registrant X is explained with reference to Fig. 5 and Fig. 6. First, the worker dispatching company A retrieves and selects suitable registrants in accordance with the above Step S3 and Step S4 (Step S11).

Next, the worker dispatching company A gives an instruction to the message server 24 to give notice to the registrant X so selected to the effect that the company's client enterprise requested of the company to dispatch a worker and the company wishes to have the registrant's reply thereto. In this case, worker dispatching company A may give the server an instruction so as to give the notice by selecting a predetermined message from among the messages stored in advance in message storage means 31 by following the preset instruction indicated on the screen of the company's terminal device 3a, or the company may give an instruction, by inputting a new message and registering it in the message storage means, to the effect that the notice of the new message should be given (Step S12).

The message server 24, based on the instruction from worker dispatching company A and by using transmitting/receiving means 32, gives message notice to the terminal device (personal computer) 1a of registrant X via e-mail, or to telephone/FAX 11a, mobile phone 11b via voice mail, FAX message transmission, etc. (Step S13).

An example of such notice for making an appointment is given to the mobile phone 11b via voice mail. The example is as follows:
"This is worker dispatching company A that Mr. X is registered with. Our client enterprise ZZ company has requested that we dispatch an accountant. If you wish to apply for the job, please input 1, otherwise input 2."

The registrant X who received this message replies by inputting 1 if he wishes to apply for the job by operating the mobile phone 11b. When receiving the reply, the transmitting/receiving means 32 of message server 24 provides the worker dispatching company A with information to the effect that the registrant X "wishes to apply for the job" and at the same time stores the information into the registrant DB within the data base server 23 as the present status information of registrant X (Step S14). Then, the worker dispatching company A makes contact with the registrant X and the client enterprise to make and determine an appointment as to interviewing and other necessary matters (Step S15). The contact from worker dispatching company A can be made by means of an ordinary telephone, FAX and also e-mail.

When the dispatching of registrant X to the client enterprise is determined, the worker dispatching company A registers the determination of dispatching to registrant DB 26 by operating the company's terminal device 3a (Step S16). Further, depending on the necessity of worker dispatching company A, the information is registered in the dispatching history of history DB 27 (Step S17). As the processing of making appointment is executed as above, the operations from the selection of suitable registrants to the notification to the registrants and receipt of reply from the registrants are automated by the human resource management center, and this enables the worker dispatching company to greatly enhance its business efficiency. Also, since the present status information and dispatching history information with respect to the registrants are stored in the data base of the human resource management center as updated information, human resource management can easily be performed based on the updated information of the company's registrants by referring to and retrieving the information at any time.

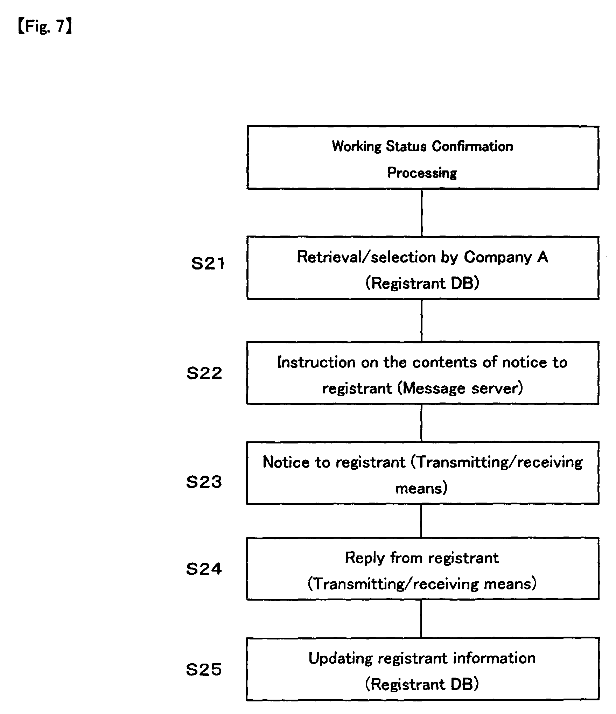

Now, as is often the case with person seeking employment, the same person is registered with a plurality of worker dispatching companies. Therefore, in order to timely determine who is available for dispatching, it is very important, for each worker dispatching company to check and confirm in real time the working status of each registrant, such as, if the registrant of the company is working through other worker dispatching company at a point of time, if he or she is in the status of waiting for dispatching, and when he will be available for a job though he is presently working. Consequently, another example wherein the worker dispatching company A performs the confirmation processing of the company registrant's working status by utilizing the human resource management service system of the preferred embodiment according to this invention is explained below with reference to Fig. 7.

First, the worker dispatching company A accesses the company's registrant DB 26, retrieves and selects its registrants whose present status is "not working" (Step S21). Next, the worker dispatching company A instructs the message server 27 to notify each selected registrant to the effect that confirmation on the present working status is to be made and his or her reply thereto is required. In this case, the worker dispatching company A may, according to the preset instruction indicated on the screen of the company's terminal device 3a, give the server an instruction so as to give the notice by selecting the predetermined message from among the messages stored in advance in message storage means 31 or give an instruction, by inputting a new message and registering it in the message storage means, to the effect that the notice of the new message should be given (Step S22).

The message server 24, based on the instruction from worker dispatching company A and by using the transmitting/receiving means 32, gives message notice to the terminal device (personal computer) of the registrant via e-mail, or to telephone/FAX, or to mobile phone via voice mail, FAX message transmission, etc. (Step S23).

An example of such confirmation notice, is given to the registrant's mobile phone, via voice mail. The example is as follows:
"This is worker dispatching company A that Mr. X is registered with. Please confirm as to the present working status. Input 1 if you are waiting for dispatching and not working at present, input 2 if you are working on a long term basis, and input 3 if you are currently working for a short term and will soon be waiting for dispatching."

The registrant who received this message gives a reply thereto by inputting 1 if he wishes to apply for the job by operating the mobile phone (Step S 24). When receiving the reply, the transmitting/receiving means 32 of message server 24 provides the worker dispatching company A with the information to the effect that the registrant "not working and waiting for dispatching" and at the same time stores the information into the registrant DB 26 within the data base server 23 as the present status information of registrant X together with the date information of receiving the reply, to update the information (Step S25). In this way, the worker dispatching company can timely determine yes or no for dispatching the company's registrants by checking and confirming the working status of registrants occasionally or regularly.

Now, in the human resource management service system of the preferred embodiment according to this invention, as stated above, since the person seeking employment can be registered concurrently with a plurality of worker dispatching companies he desires, there may be a conflict of worker dispatching between worker dispatching companies as a matter of course. In this case, one can consider that the worker dispatching companies competitive to each other will save time by avoiding duplicated confirmation on the working status if they can share the information with respect to the working status of an identical registrant in common. Therefore, in Fig. 5, for this purpose, an item of "anonymous working information" is added to human resource DB 25 by giving a specific ID thereto. This ID is open only to the worker dispatching companies subject to mutual agreement for opening the information regarding the registrant working status anonymously (without mentioning the company name) between the companies competitive to each other, thereby the information secrecy of the worker dispatching company is secured without opening any information more than necessary. With respect to the identical registrant managed by this ID, the worker dispatching companies can share the registrant's working status information including the present status, the starting date of work, the term of work or the like stored in registrant DB 26. Therefore, one worker dispatching company can greatly save time to confirm if a registrant of the company selected for the purpose of dispatching is presently working through other worker dispatching company.

In the human resource management service system of the preferred embodiment according to this invention, a third party system administrator who manages the human resource management service center can install the Web server, data base server, and message server within the human resource management center so that the aforementioned service can be provided on the basis of the standard specification to unspecified persons seeking employment (registrants) and a plurality of worker dispatching companies. In this case, the system administrator may endow the worker dispatching company with a right to customize the company's page, thereby enabling the company to modify the system so as to facilitate its use by designing layout, menu, etc. independently. For example, the worker dispatching company can also perform its own campaign and marketing by using the company's home page.

It should be noted that this invention is not limited to the aforementioned preferred embodiment and it is needless to say that various modifications can be made within the scope of technical idea as stated in Claims.

As explained above, according to the human resource management service system of this invention, human resource management necessary for the operations of the worker dispatching company can be performed by operating the company's terminal device connected to the network without introduction of any special equipment by the company utilizing the system. Furthermore, according to the human resource management service system of this invention, the sharing of the human resource information regarding the registered persons seeking employment by a plurality of worker dispatching companies under predetermined limitations enables the person seeking employment to save time greatly by avoiding registration with the worker dispatching companies in a conventional way, and thus the effects on the industry are most significant.

The preferred embodiment of the present invention has been disclosed by way of example and it will be understood that other modifications may occur to those skilled in the art without departing from the scope and the spirit of the appended claims.

The features disclosed in the foregoing description, in the claims and/or in the accompanying drawings may, both separately and in any combination thereof, be material for realising the invention in diverse forms thereof.

## Claims

1. A human resource management service system comprising: a terminal device of a person seeking employment; a human resource management center; and a plurality of terminal devices of worker dispatching companies; said terminal devices being connected to said human resource management center via network, whereby said human resource management center on the network centrally renders services to said terminal device of said person seeking employment and said terminal devices of said worker dispatching companies via said network;
wherein said human resource management center provides said person seeking employment with a service to register human resource information including said person's experiences, skills, and qualifications by designating at lease one of said worker dispatching companies said human resource information is to be registered with; stores, when at lease one of said worker dispatching company is so designated by said person seeking employment, a part or the whole of said human resource information of said person seeking employment as primary information for its registrants which can be referred to and searched by said designated worker dispatching company; and provides said plurality of worker dispatching companies with a service to store, in a read-write enabled state, secondary information per said worker dispatching company and enables utilization of said primary and said secondary information, said secondary information being associated with said primary information with respect to the said registrants.

2. A human resource management service system as claimed in Claim 1, wherein said secondary information per said worker dispatching company contains history information related to said registrants, said history information arising in relation to dispatching operations for its registrants.

3. A human resource management service system comprising:
a terminal device of a person seeking employment;
a human resource management center; and
a plurality of terminal devices of worker dispatching companies;
wherein said terminal devices are connected to said human resource management center via network whereby said human resource management center on the network centrally renders services to said terminal device of said person seeking employment and said terminal devices of said worker dispatching companies via said network;
said terminal device of person seeking employment having means for inputting human resource information including said person's experiences, qualifications, and skills by designating at least one or more of worker dispatching companies said person seeking employment desires to register the information with;
said Human resource management center comprising human resource information storage means for storing the input human resource information; registrant information storage means having areas allotted for each of said plurality of worker dispatching companies, a part or the whole of said input human resource information corresponding to said person seeking employment from said human resource information storage means being stored as registrant information of registrant into said areas allotted for the particular worker dispatching company or each of plural worker dispatching companies upon designation by said person seeking employment; history information storage means with areas allotted for each of said plurality of worker dispatching companies to store the history information related to said registrant, said history information arising in relation to dispatching operations for said registrant; and information management means for managing the information stored in said human resource information storage means, registrant information storage means and history storage means; and
said terminal devices of worker dispatching companies comprising input/output means for referring to, retrieve and update the aforementioned registrant information stored in said registrant information storage means and said history information stored in said history information storage means via said information management means.

4. A human resource management service system as claimed in Claim 3, wherein said input means provided to said terminal device of person seeking employment and said input/output means provided to said plurality of terminal devices of worker dispatching companies are the electronic terminal devices such as personal computers with a Web browser installed, cellular phones or personal digital assistants capable of reference to Web pages, etc.; and said human resource management center is provided with a Web server on the internet and a data base server for managing the information stored in each of said human resource information storage means, registrant information storage means, and history information storage means.

5. A human resource management service system as claimed in Claim 3, wherein said human resource management center is provided with a message server having storage means for storing, in advance, messages which said worker dispatching companies desire to send; and transmitting/receiving means for selectively transmitting a predetermined message to a predetermined registrant of said worker dispatching company in accordance with the procedure designated in advance, and receiving a reply to said predetermined message from said registrant; and said information management means stores said reply received from said registrant into said registrant information storage means and/or history information storage means.
